# EUROPÄISCHE PATENTSCHRIFT

(11) **EP 3 914 478 B1**
(45) Veröffentlichungstag und Bekanntmachung des Hinweises auf die Patenterteilung: **02.11.2022**
(21) Anmeldenummer: 19828215.4
(22) Anmeldetag: 04.12.2019
(51) Int. Cl.: B60R 1/00

(54) **VERFAHREN ZUR ÜBERWACHUNG EINER POSITION EINES ANSCHLUSSKABELS EINES ANHÄNGERS UND EIN ENTSPRECHENDES KAMERASYSTEM**
METHOD FOR MONITORING A POSITION OF A CONNECTING CABLE OF A TRAILER AND A CORRESPONDING CAMERA SYSTEM
PROCÉDÉ DE SURVEILLANCE D'UNE POSITION D'UN CÂBLE DE CONNEXION D'UNE REMORQUE ET UN SYSTÈME DE CAMÉRA CORRESPONDANT

(30) Priorität: 22.01.2019 DE 102019200748
(43) Veröffentlichungstag der Anmeldung: 01.12.2021
(73) Patentinhaber: Conti Temic microelectronic GmbH, 90411 Nürnberg (DE)
(72) Erfinder: FENDT, Günter Anton, 90411 Nürnberg (DE)
(74) Vertreter: Continental Corporation
(86) Internationale Anmeldenummer: PCT/DE2019/200142
(87) Internationale Veröffentlichungsnummer: WO 2020/151778

(56) Entgegenhaltungen:
- EP-A1- 2 620 326
- EP-A1- 2 648 950
- EP-A1- 3 260 334
- EP-B1- 2 620 326
- EP-B1- 2 648 950
- DE-U1- 20 012 178

## Beschreibung

Die Erfindung betrifft ein Verfahren zur Überwachung einer Position eines Anschlusskabels eines Anhängers und ein Kamerasystem zur Überwachung einer Position eines Anschlusskabels eines Anhängers sowie ein Kraftfahrzeug mit einem Kamerasystem.

Heutzutage sind Fahrerassistenzsysteme nicht mehr aus Kraftfahrzeugen wegzudenken. Fahrerassistenzsysteme weisen Funktionen auf, die den Fahrer eines Fahrzeugs beim Fahren unterstützen. Dies wird insbesondere dadurch erreicht, dass das System das Umfeld erfasst bzw. aufzeichnet und die erfassten Informationen verarbeitet und dann entsprechende Fahrmanöver durchführt oder dem Fahrer die Umfeldinformationen wiedergibt. Hierfür kommen insbesondere Kameras zum Einsatz, die zumindest bereichsweise den Raum um das Fahrzeug herum erfassen. Bekannt sind beispielsweise Frontkameras, die im Bereich der Windschutzscheibe angeordnet sind und einen Bereich vor dem Fahrzeug erfassen. Ferner gehören mittlerweile auch nach hinten schauende Kameras, wie Rückfahrkameras, zum Stand der Technik. Diese erfassen insbesondere einen hinter dem Fahrzeug liegenden Bereich. Auch Surround-View-Systeme kommen inzwischen immer häufiger zum Einsatz.

Obwohl heutige Kraftfahrzeuge vermehrt über Anhängerkupplungen verfügen, ist das Ziehen von Anhängern nicht alltäglich. Eine bekannte Nutzung von Anhängern ist der Transport von großen Möbelstücken, insbesondere bei Umzügen. Ferner kommen Anhänger in Form von Wohnmobilen zum Einsatz. Diese Ereignisse erfolgen nur gelegentlich und so liegt eine gewisse Zeit zwischen der Nutzung eines Anhängers. Es fehlt somit die Routine, so dass die Befestigung eines Anhängers vielmals fehlerhaft erfolgt, was mit bösen Folgen einhergehen kann.

Damit bei der Nutzung von Anhängern die folgenden Kraftfahrzeuge weiterhin über den Zustand des anhänger-ziehenden Ego-Kraftfahrzeugs informiert werden können, ist eine Verbindung zwischen Ego-Kraftfahrzeug und Anhänger nötig. Dies erfolgt normalerweise über ein Kabel. Das Kabel sorgt insbesondere dafür, dass das Fahrmanöver des Ego-Kraftfahrzeug trotz des Anhängers für die nachfolgenden Kraftfahrzeuge erkennbar bleibt. Ferner können durch das Kabel die Bremsimpulse auf den Anhänger übertragen werden.

Beispielsweise beschreibt die EP 2 648 950 A1 ein Kraftfahrzeug mit einem Anhänger, wobei der Anhänger mit seiner Deichsel mit einer heckseitigen Kupplungseinrichtung des Kraftfahrzeus verbunden ist, und wobei das Kraftfahrzeug heckseitig eine Rückfahrkamera aufweist zur optischen Bestimmung eines Deichselwinkels. Der Anhänger ist zudem über eine elektrische Steckverbindung mit einem Kabel mit dem Kraftfahrzeug verbunden, so dass Glühlampen von Bremslichtern oder Schlusslichtern am Heck des Anhängers elektrisch versorgt werden können.

Bei nicht sachgerechter Montage des Kabels kann es während des Betriebs der Anhängerkombination - insbesondere aufgrund von Unebenheiten der Fahrbahn - zu einem Verrutschen des Kabels, schlimmstenfalls zum vollständigen Ablösen kommen. Hierdurch kann das Anschlusskabel beschädigt werden bzw. schlimmstenfalls kann dies zu einer Verkehrsgefährdung führen.

Ausgehend hiervon ist es nun Aufgabe der Erfindung, ein Verfahren bzw. ein System bereitzustellen, mit dem ein Ziehen eines Anhängers sicher und insbesondere unfallfrei vonstattengehen kann.

Die Aufgabe wird durch ein Verfahren mit den Merkmalen des unabhängigen Patentanspruchs 1 gelöst. Bevorzugte Ausführungsformen sind Gegenstand der Unteransprüche. Ein Kamerasystem sowie ein Kraftfahrzeug sind Gegenstände der nebengeordneten Patentansprüche.

Gemäß einem ersten Aspekt bezieht sich die vorliegende Erfindung auf ein Verfahren zur Überwachung einer Position eines Anschlusskabels eines Anhängers mit den Schritten:
- Erfassen eines hinter einem Kraftfahrzeug liegenden Bereichs mit einer Kamera,
- Verarbeiten der erfassten Bilddaten mit einer Auswerteeinheit und Erkennen des Anschlusskabels sowie Bestimmen einer Position des Anschlusskabels,
- Vergleichen der erfassten Position des Anschlusskabels mit einer sicheren Position des Anschlusskabels,
- Ausgeben eines Warnsignals, wenn die erfasste Position des Anschlusskabels von der sicheren Position abweicht.

Das erfindungsgemäße Verfahren sorgt insbesondere dafür, dass die Position eines Anschlusskabels eines Anhängers überwacht wird, bevorzugt kontinuierlich während einer Fahrt. Ändert sich die Position des Anschlusskabels, dann wird der Fahrer darüber informiert. Der Fahrer kann so vor der Entstehung einer Unfallgefährdung bzw. vor einer Beschädigung des Anschlusskabels entsprechende Maßnahmen ergreifen. Der Fahrer kann beispielsweise das Kraftfahrzeug stoppen und das Anschlusskabels wieder befestigen. Hierdurch kann insgesamt ein sicheres Ziehen eines Anhängers erreicht werden.

Die Erkennung des Anschlusskabels erfolgt insbesondere mit einer in der Bildverarbeitung bekannten Objekterkennungsmethode.

Die Ausgabe des Warnsignals kann optisch und/oder akustisch erfolgen. Von Vorteil ist es, wenn der Fahrer auf einer Anzeigeeinrichtung, insbesondere auf einem Monitor und/oder einem Head-Up Display über die Position des Anschlusskabels informiert wird. Von Vorteil ist es, wenn dem Fahrer zumindest ein Bildausschnitt der Kamera dargestellt wird, wobei Überlagerungen bzw. Hervorhebungen, die insbesondere farblich ausgebildet sind, eingeblendet werden, wenn die Position des Anschlusskabels von der sicheren Position abweicht. Dies sorgt dafür, dass der Fahrer einfach und gut erkennbar über eine Fehlposition des Anschlusskabels informiert wird.

Denkbar ist, dass eine mehrstufige Warnung erfolgen kann. Weicht das Anschlusskabel nur unwesentlich von der sicheren Position ab, dann kann ein alternierender Ton bzw. ein alternierendes Piepen erfolgen. Weicht die Position des Anschlusskabels immer mehr von der sicheren Position ab, dann kann das akustische Signal in einen Dauerton bzw. ein Dauerpiepen übergehen. Ebenso kann sich die optische Warnung verändern, insbesondere ergeht ein Farbwechsel. Bevorzugt erfolgt ein Farbwechsel in der Hervorhebung bzw. Überlagerung. Besonders bevorzugt erfolgt der Farbwechsel von gelb über orange nach rot hin.

In einer bevorzugten Ausgestaltung erfolgt die Ausgabe des Warnsignals erst, wenn zwischen der erfassten Position des Anschlusskabels von der sicheren Position ein Abstand bzw. eine Differenz vorliegt, der einen Schwellwert übersteigt.

Mit sicherer Position wird im Sinne der Erfindung insbesondere eine Position des Anschlusskabels verstanden, bei der während des Betriebs des Kraftfahrzeugs keine Beschädigung am Anschlusskabel erfolgen sollte. Das Anschlusskabel befindet sich insbesondere in der sicheren Position, wenn es ausreichend entfernt von der Fahrbahn angeordnet ist. In einer vorteilhaften Ausgestaltung der vorliegenden Erfindung handelt es sich bei der sicheren Position um einen definierten Abstand zwischen dem Anschlusskabel in der sicheren Position, insbesondere in einer Soll-Position, und der Fahrbahn. Im Sinne der Erfindung wird der definierte Abstand insbesondere als ein Sollabstand gesehen. Der Sollabstand wird bevorzugt hinterlegt.

In einer vorteilhaften Ausgestaltung wird als erfasster Abstand des Anschlusskabels insbesondere der geringste Abstand bestimmt, den das Anschlusskabel zur Fahrbahn hat.

In einer bevorzugten Ausgestaltung wird ein Warnsignal ausgegeben, wenn der Abstand des erfassten Anschlusskabels zur Fahrbahn geringer ist als der definierte Abstand. Von Vorteil ist es, wenn das Warnsignal erst dann ausgegeben wird, wenn der Abstand des erfassten Anschlusskabels von dem definierten Abstand um einen Schwellwert bzw. eine Differenz abweicht. Der Schwellwert ist bevorzugt im System hinterlegt. Hierbei ist vorteilhaft, dass der Fahrer nicht schon bei der kleinesten Abweichung eine Warnung erhält, obwohl noch kein Gefahrpotential vorliegt.

Bevorzugt ist der sichere Abstand des Anschlusskabels und/oder der Sollabstand und/oder der Schwellwert in einer Speichereinheit hinterlegt ist und kann abgerufen werden.

Von Vorteil ist es, wenn eine Überprüfung durchgeführt wird, ob ein Anhänger vorhanden ist. Die Überprüfung kann mit einer Kamera, insbesondere einer Rückfahrkamera, mittels Auswertung einer elektrischen Kontaktierung und/oder mit einer Anhängerkupplung-Stützlasterkennung erfolgen. Ist ein Anhänger erkannt worden, dann wird insbesondere die Kamera aktiviert.

Bevorzugt wird das erfindungsgemäße Verfahren dann nur durchgeführt, wenn sich das Kraftfahrzeug in Bewegung befindet.

Es ist auch möglich, dass das Verfahren aktiviert wird, wenn der Motor des Kraftfahrzeugs gestartet wird.

Gemäß einem zweiten Aspekt bezieht sich die Erfindung auf ein Kamerasystem zur Überwachung einer Position eines Anschlusskabels eines Anhängers mit zumindest einer Kamera, die einen hinter einem Kraftfahrzeug befindlichen Bereich erfasst; mit einer Auswerteeinheit zur Verarbeiten der erfassten Bilddaten, wobei die Auswerteeinheit derart ausgebildet ist, dass das Anschlusskabel erkannt und eine Position des Anschlusskabels bestimmt wird; mit einer Vergleichseinrichtung, die derart ausgebildet ist, dass die erfasste Position des Anschlusskabels mit einer sicheren Position des Anschlusskabels verglichen wird; und mit einer Warneinrichtung zur Ausgabe eines Warnsignals, wenn die erfasste Position des Anschlusskabels von der sicheren Position abweicht.

Das erfindungsgemäße System sorgt insbesondere für ein sicheres Ziehen eines Anhängers. Gerade für Personen, die nur unregelmäßig einen Anhänger ziehen, kann mit dem erfindungsgemäßen System unnötigen Ärger vorgebeugt werden.

In einer bevorzugten Ausgestaltung kann das System eine Speichereinheit umfassen. In der Speichereinheit ist die sichere Position und/oder ein Sollabstand und/oder ein Schwellwert hinterlegt. Die Speichereinheit kann dabei Teil der Auswerteeinheit sein. Es ist auch denkbar, dass die Vergleichseinheit Teil der Auswerteeinheit ist.

Vorteilhafterweise handelt es sich bei der Kamera um eine Rückfahrkamera. Hierdurch erlangt der Fahrer einen Mehrwert, da eine bereits am Kraftfahrzeug vorhandene Kamera mit einem nur recht begrenzten Aufgabenbereich eine Zusatzfunktion erhält. Es ist aber grundsätzlich auch möglich, dass die Kamera eine Kamera eines Surround-View-Systems ist, die insbesondere in einem Heckbereich des Kraftfahrzeugs angeordnet ist.

Das erfindungsgemäße Kamerasystem eignet sich insbesondere zur Durchführung eines erfindungsgemäßen Verfahrens.

Gemäß einem dritten Aspekt bezieht sich die Erfindung auf ein Kraftfahrzeug aufweisend ein erfindungsgemäßes Kamerasystem.

Weitere vorteilhafte Ausgestaltungen ergeben sich aus den Zeichnungen. Hierbei zeigen:
- Fig. 1:: schematische Darstellung eines Ablaufdiagramms eines erfindungsgemäßen Verfahrens zur Überwachung einer Position eines Anschlusskabels eines Anhängers in einer Ausgestaltung;
- Fig. 2:: schematische Darstellung eines Kraftfahrzeugs mit einem erfindungsgemäßen Kamerasystem in einer Ausgestaltung, wobei sich ein Anschlusskabel in einer sicheren Position befindet;
- Fig. 3:: schematische Darstellung eines Kraftfahrzeugs mit einem erfindungsgemäßen Kamerasystem in einer Ausgestaltung, wobei sich ein Anschlusskabel in einer von einer sicheren Position abweichenden Position befindet;
- Fig. 4:: schematische Darstellung eines Kraftfahrzeugs mit einem erfindungsgemäßen Kamerasystem in einer weiteren Ausgestaltung, wobei sich ein Anschlusskabel in einer von einer sicheren Position abweichenden Position befindet.

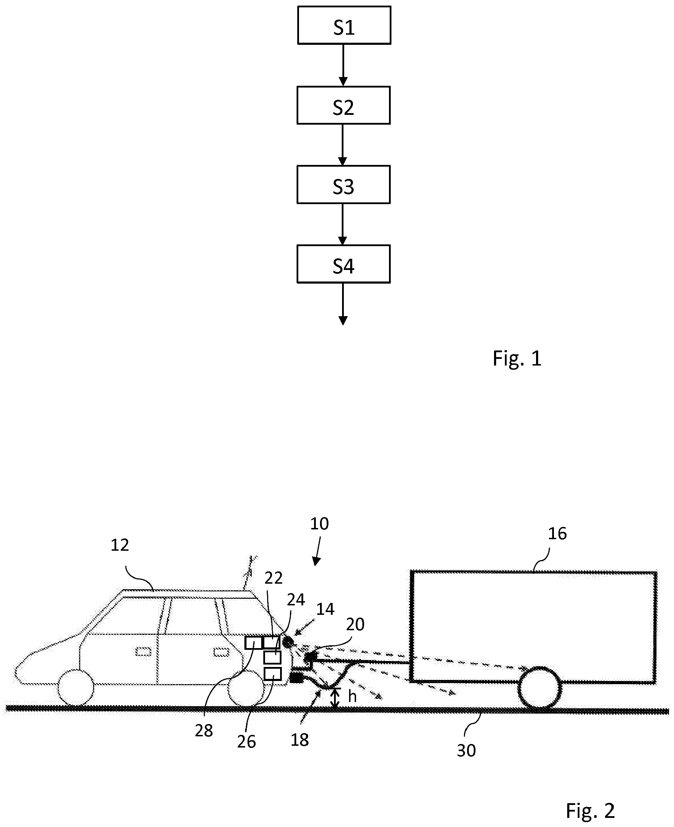

Figur 1 zeigt eine schematische Darstellung eines Ablaufdiagramms eines erfindungsgemäßen Verfahrens zur Überwachung einer Position eines Anschlusskabels 18 eines Anhängers 16 in einer Ausgestaltung. In einem ersten Schritt S1 wird ein hinter einem Kraftfahrzeug 12 liegender Bereich mit einer Kamera 14 erfasst. In einem zweiten Schritt S2 werden die erfassten Bilddaten der Kamera 14 mit einer Auswerteeinheit 22 ausgewertet. Es erfolgt die Erkennung des Anschlusskabels 18 sowie die Bestimmung einer Position des Anschlusskabels 18. Zur Erkennung des Anschlusskabels 18 können bekannte Objekterkennungsmethoden herangezogen werden. Bei der Bestimmung der Position des Anschlusskabels 18 wird insbesondere der geringste Abstand zwischen dem Anschlusskabel 18 und einer Fahrbahn 30 bestimmt. In einem dritten Schritt wird die erfasste Position des Anschlusskabels 18 mit einer sicheren Position des Anschlusskabels 18 verglichen. Bei der sicheren Position kann es sich um einen Abstand zwischen dem Anschlusskabel 18 in einer sicheren Position, insbesondere in einer Sollposition, und der Fahrbahn 30 handeln. Der Abstand ist bevorzugt in einer Speichereinheit 28 hinterlegt. In einem vierten Schritt S4 wird ein Warnsignal ausgeben, wenn die erfasste Position des Anschlusskabels 18 von der sicheren Position abweicht. Das Warnsignal wird bevorzugt nur dann ausgegeben, wenn der Abstand des erfassten Anschlusskabels 18 zur Fahrbahn 30 geringer ist als der Sollabstand und um einen Schwellwert von dem sicheren Abstand abweicht.

Figur 2 zeigt eine schematische Darstellung eines Kraftfahrzeugs 12 mit einem erfindungsgemäßen Kamerasystem 10 zur Überwachung einer Position eines Anschlusskabels 18 eines Anhängers 16 in einer Ausgestaltung. Das Kamerasystem 10 weist eine Kamera 14 auf, die einen hinter einem Kraftfahrzeug 12 befindlichen Bereich erfasst. Der Erfassungsbereich der Kamera 14 ist in Figur 2 durch die gestrichelten Pfeile dargestellt. Ferner weist das Kamerasystem 10 eine Auswerteeinheit 22 auf. Die Auswerteeinheit 22 verarbeitet die erfassten Bilddaten. Hierdurch kann das Anschlusskabel 18 erkannt und seine Position bestimmt werden. Bevorzugt wird der geringste Abstand des Anschlusskabels 18 zur Fahrbahn 30 bestimmt. Ferner umfasst das System 10 eine Vergleichseinrichtung 24. Die Vergleichseinrichtung 24 vergleicht die erfasste Position des Anschlusskabels 18 mit einer sicheren Position des Anschlusskabels 18. Die sichere Position des Anschlusskabels 18 ist bevorzugt in einer Speichereinheit 28 hinterlegt. Des Weiteren umfasst das System 10 eine Warneinrichtung 26 zur Ausgabe eines Warnsignals, wenn die erfasste Position des Anschlusskabels 18 von der sicheren Position abweicht.

In Figur 2 weist das erfasste Anschlusskabel 18 einen Abstand h von der Fahrbahn 30 auf. Der Abstand entspricht im Wesentlichen einem in der Speichereinheit 28 hinterlegten Sollabstand. Es besteht somit während dem Betrieb des Kraftfahrzeugs 12 keine Gefährdung durch das Anschlusskabel 18, so dass eine Warnung hier nicht ergeht.

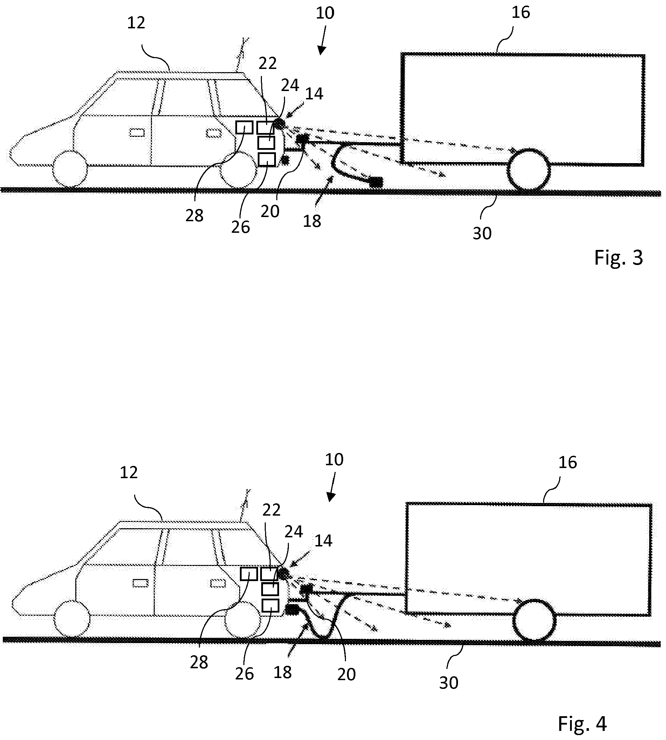

Figur 3 zeigt eine schematische Darstellung eines Kraftfahrzeugs 12 mit einem erfindungsgemäßen Kamerasystem 10 in einer weiteren Ausgestaltung. Das in Figur 3 dargestellte System 10 entspricht prinzipiell dem in Figur 2 dargestellten System 10. Lediglich die Position des Anschlusskabels 18 unterscheidet sich voneinander. In Figur 3 hat sich das Anschlusskabel 18 aus einer Kontaktierung des Kraftfahrzeugs 12 gelöst und liegt somit auf der Fahrbahn 30 auf. Der Abstand des Anschlusskabels 18 zur Fahrbahn 30 beträgt somit im Wesentlichen null und ist somit geringer als der hinterlegte Sollabstand. Die Warneinrichtung 26 gibt somit ein Warnsignal aus.

Figur 4 zeigt eine schematische Darstellung eines Kraftfahrzeugs 12 mit einem erfindungsgemäßen Kamerasystem 10 in einer noch weiteren Ausgestaltung. Das in Figur 4 dargestellte System 10 entspricht prinzipiell den in den Figuren 2 und 3 dargestellten Systemen 10. Lediglich die Position des Anschlusskabels 18 unterscheidet sich voneinander. In Figur 4 hängt das Anschlusskabel 18 derart durch, dass es die Fahrbahn 30 berührt. Der Abstand zur Fahrbahn 30 beträgt damit im Wesentlichen null und ist somit geringer als der hinterlegte Sollabstand. Die Warneinrichtung 26 gibt somit ein Warnsignal aus.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird. Auch eine Kombination der verschiedenen Ausführungsbeispiele ist möglich.

### Bezugszeichenliste

- 10: Kamerasystem
- 12: Kraftfahrzeug
- 14: Rückfahrkamera
- 16: Anhänger
- 18: Anschlusskabel
- 20: Anhängerkupplung
- 22: Auswerteeinheit
- 24: Vergleichseinrichtung
- 26: Warneinrichtung
- 28: Speichereinheit
- 30: Fahrbahn
- h: Abstand Anschlusskabel von Fahrbahn
- S1-S4: Verfahrensschritte

## Patentansprüche

1. Verfahren zur Überwachung einer Position eines Anschlusskabels (18) eines Anhängers (16) mit den Schritten:
- Erfassen (S1) eines hinter einem Kraftfahrzeug (12) liegenden Bereichs mit einer Kamera (14),
- Verarbeiten (S2) der erfassten Bilddaten mit einer Auswerteeinheit (22) und Erkennen des Anschlusskabels (18) sowie Bestimmen einer Position des Anschlusskabels (18),
- Vergleichen (S3) der erfassten Position des Anschlusskabels (18) mit einer sicheren Position des Anschlusskabels (18),
- Ausgeben (S4) eines Warnsignals, wenn die erfasste Position des Anschlusskabels (18) von der sicheren Position abweicht.

2. Verfahren nach Anspruch 1, **dadurch gekennzeichnet, dass** es sich bei der sicheren Position um einen definierten Abstand zwischen dem Anschlusskabel (18) und einer Fahrbahn (30) handelt.

3. Verfahren nach Anspruch 2, **dadurch gekennzeichnet, dass** ein Warnsignal ausgegeben wird, wenn der Abstand des erfassten Anschlusskabels (18) zur Fahrbahn (30) geringer ist als der definierte Abstand.

4. Verfahren nach einem der vorangehenden Ansprüche, **dadurch gekennzeichnet, dass** die sichere Position des Anschlusskabels (18) in einer Speichereinheit (28) hinterlegt ist und diese abgerufen wird.

5. Verfahren nach einem der vorangehenden Ansprüche, **dadurch gekennzeichnet, dass** eine Überprüfung durchgeführt wird, ob ein Anhänger (16) vorhanden ist.

6. Kamerasystem (10) zur Überwachung einer Position eines Anschlusskabels (18) eines Anhängers (16), insbesondere zur Durchführung eines Verfahrens nach einem der vorangehenden Ansprüche, mit zumindest einer Kamera (14), die einen hinter einem Kraftfahrzeug (12) befindlichen Bereich erfasst, mit einer Auswerteeinheit (22) zur Verarbeiten der erfassten Bilddaten, wobei die Auswerteeinheit (22) derart ausgebildet ist, dass das Anschlusskabels (18) erkannt und eine Position des Anschlusskabels (18) bestimmt wird, mit einer Vergleichseinrichtung (24), die derart ausgebildet ist, dass die erfasste Position des Anschlusskabels (18) mit einer sicheren Position des Anschlusskabels (18) verglichen wird, und mit einer Warneinrichtung (26) zur Ausgabe eines Warnsignals, wenn die erfasste Position des Anschlusskabels (18) von der sicheren Position abweicht.

7. Kamerasystem (10) nach Anspruch 6, **gekennzeichnet durch** eine Speichereinheit (28), in der die sichere Position, insbesondere ein Sollabstand zwischen Anschlusskabels (18) und einer Fahrbahn (30), hinterlegt ist.

8. Kamerasystem nach einem der Ansprüche 6 oder 7, **dadurch gekennzeichnet, dass** die Kamera (14) eine Rückfahrkamera ist.

9. Kraftfahrzeug (12) aufweisend ein Kamerasystem (10) nach einem der Ansprüche 6 bis 8.

## Claims

1. Method for monitoring a position of a connecting cable (18) of a trailer (16), comprising the steps of:
- capturing (S1) an area situated behind a motor vehicle (12) using a camera (14),
- processing (S2) the captured image data using an evaluation unit (22) and identifying the connecting cable (18) and also determining a position of the connecting cable (18),
- comparing (S3) the detected position of the connecting cable (18) with a safe position of the connecting cable (18),
- outputting (S4) a warning signal if the detected position of the connecting cable (18) differs from the safe position.

2. Method according to Claim 1, **characterized in that** the safe position is a defined distance between the connecting cable (18) and a carriageway (30).

3. Method according to Claim 2, **characterized in that** a warning signal is output if the distance of the detected connecting cable (18) from the carriageway (30) is less than the defined distance.

4. Method according to one of the preceding claims, **characterized in that** the safe position of the connecting cable (18) is stored in a memory unit (28) and said position is retrieved.

5. Method according to one of the preceding claims, **characterized in that** a check is performed to determine whether a trailer (16) is present.

6. Camera system (10) for monitoring a position of a connecting cable (18) of a trailer (16), in particular for performing a method according to one of the preceding claims, having at least one camera (14), which captures an area situated behind a motor vehicle (12), having an evaluation unit (22) for processing the captured image data, the evaluation unit (22) being in a form such that the connecting cable (18) is identified and a position of the connecting cable (18) is determined, having a comparison device (24), which is in a form such that the detected position of the connecting cable (18) is compared with a safe position of the connecting cable (18), and having a warning device (26) for outputting a warning signal if the detected position of the connecting cable (18) differs from the safe position.

7. Camera system (10) according to Claim 6, **characterized by** a memory unit (28) that stores the safe position, in particular a desired distance between the connecting cable (18) and a carriageway (30).

8. Camera system according to either of Claims 6 and 7, **characterized in that** the camera (14) is a reversing camera.

9. Motor vehicle (12) comprising a camera system (10) according to one of Claims 6 to 8.

## Revendications

1. Procédé permettant de surveiller une position d'un câble de raccordement (18) d'une remorque (16), comprenant les étapes consistant à :
- détecter (S1) à l'aide d'une caméra (14) une zone située derrière un véhicule automobile (12),
- traiter (S2) les données d'image détectées à l'aide d'une unité d'évaluation (22), et identifier le câble de raccordement (18), ainsi que déterminer une position d'un câble de raccordement (18),
- comparer (S3) la position détectée du câble de raccordement (18) avec une position sûre du câble de raccordement (18),
- émettre (S4) un signal d'alarme si la position détectée du câble de raccordement (18) diverge de la position sûre.

2. Procédé selon la revendication 1, **caractérisé en ce que** la position sûre est une distance définie entre le câble de raccordement (18) et une chaussée (30).

3. Procédé selon la revendication 2, **caractérisé en ce qu'**un signal d'alarme est émis si la distance entre le câble de raccordement détecté (18) et la chaussée (30) est inférieure à la distance définie.

4. Procédé selon l'une quelconque des revendications précédentes, **caractérisé en ce que** la position sûre du câble de raccordement (18) est mémorisée dans une unité de mémoire (28) et que celle-ci est interrogée.

5. Procédé selon l'une quelconque des revendications précédentes, **caractérisé en ce qu'**un contrôle est effectué si une remorque (16) est présente.

6. Système de caméra (10) permettant de surveiller une position d'un câble de raccordement (18) d'une remorque (16), en particulier pour effectuer un procédé selon l'une quelconque des revendications précédentes, comprenant au moins une caméra (14) qui détecte une zone située derrière un véhicule automobile (12), une unité d'évaluation (22) permettant de traiter les données d'image détectées, l'unité d'évaluation (22) étant réalisée de telle sorte que le câble de raccordement (18) est identifié et une position du câble de raccordement (18) est déterminée, un dispositif de comparaison (24) qui est réalisé de telle sorte que la position détectée du câble de raccordement (18) est comparée avec une position sûre du câble de raccordement (18), et un dispositif d'alarme (26) permettant d'émettre un signal d'alarme si la position détectée du câble de raccordement (18) diverge de la position sûre.

7. Système de caméra (10) selon la revendication 6, **caractérisé par** une unité de mémoire (28) dans laquelle est mémorisée la position sûre, en particulier une distance de consigne, entre le câble de raccordement (18) et une chaussée (30).

8. Système de caméra selon l'une quelconque des revendications 6 ou 7, **caractérisé en ce que** la caméra (14) est une caméra de recul.

9. Véhicule automobile (12), présentant un système de caméra (10) selon l'une quelconque des revendications 6 à 8.
